# EUROPEAN PATENT SPECIFICATION

(11) **EP 2 806 006 B1**
(45) Date of publication and mention of the grant of the patent: **25.11.2020**
(21) Application number: 13739047.2
(22) Date of filing: 18.01.2013
(51) Int. Cl.: C01F 5/14, C01F 5/20, C01F 5/22, C09K 5/14, C08L 9/06, C09K 5/08, C08G 77/20, C08K 3/22, B82Y 30/00

(54) **THERMAL CONDUCTION ENHANCER**
WÄRMELEITENDER VERSTÄRKER
AGENT AUGMENTANT LA CONDUCTION THERMIQUE

(30) Priority: 20.01.2012 JP 2012009583; 11.04.2012 JP 2012089890
(43) Date of publication of application: 26.11.2014
(73) Proprietor: Kyowa Chemical Industry Co., Ltd, Takamatsu-shi, Kagawa 761-0113 (JP); Sea Water Chemical Institute Inc., Fukuoka 807-1123 (JP)
(72) Inventor: MANABE, Hitoshi, Sakaide-shi Kagawa 762-0012 (JP); KUDO, Daisuke, Sakaide-shi Kagawa 762-0012 (JP); OOHORI, Kohei, Sakaide-shi Kagawa 762-0012 (JP); MIYATA, Shigeo, Kitakyushu-shi Fukuoka 807-1123 (JP)
(74) Representative: J A Kemp LLP
(86) International application number: PCT/JP2013/051514
(87) International publication number: WO 2013/108937

(56) References cited:
- EP-A1- 1 063 199
- WO-A1-00/35808
- JP-A- H09 176 368
- JP-A- H09 176 368
- JP-A- S58 134 134
- JP-A- 2007 211 141
- JP-A- 2007 211 141
- US-A- 4 987 173

## Description

### TECHNICAL FIELD

The present invention relates to a heat conductivity improving agent, a resin composition comprising the same and a molded article of the composition. The present invention also relates to improving the heat conductivity of a resin composition.

### BACKGROUND ART

Magnesium oxide, aluminum oxide and silica have been used as agents for improving the heat conductivities of synthetic resins, rubbers and ceramics (patent document 1) . Silica has low heat conductivity. Aluminum oxide has a defect that it wears a molding machine or a mold at the time of molding as it has high hardness though it has high heat conductivity. Therefore, magnesium oxide which has low hardness and about 3 times higher heat conductivity than that of alumina has been attracting attention as a heat conductivity improving agent. However, magnesium oxide is gradually eroded by water or vapor and changes into magnesium hydroxide, thereby losing its physical properties. Therefore, various improvements have been made on magnesium oxide to achieve higher heat conductivity. Magnesium oxide having a coating layer of silicon and/or aluminum-magnesium double oxide on the surface (patent document 2) and magnesium oxide coated with a phosphorus compound (patent document 3) are such examples. Technology for using magnesium hydroxide as a heat conductivity improving agent has also been proposed (patent document 4). However, all of these do not obtain satisfactory results.
(Patent Document 1) JP-A 7-324146
(Patent Document 2) JP-A 2004-27177
(Patent Document 3) JP-A 2006-282783
(Patent Document 4) JP-A 9-176368

The following documents (i) to (iv) were identified in the search report issued by the European Patent Office:
(i) EP1063199, which describes magnesium hydroxide particles having a hexagonal crystal form and flame-retardant resin compositions comprising the particles.
(ii) US4987173, which describes a polyolefin resin composition comprising from 30% to 96% by weight of a polyolefin, from 3% to 50% by weight of a fibrous inorganic filler (which may be, among others, magnesium hydroxide fiber), and from 1% to 60% by weight of a thermoplastic elastomer. The composition is said to provide a molded material which has a good external appearance and is excellent in the impact strength, rigidity, and heat stability.
(iii) JPH09176368, which describes a synthetic resin composition said to have a high thermal conductivity and be useful as an encapsulant for electronic materials, prepared by blending (A) 100 pts.wt. synthetic resin with (B) 0-400 pts.wt. magnesium hydroxide having 3.0 × 10⁻³ strain in the <101> direction in an X-ray diffractometry and ≤ 20 m²/g specific surface area according to the BET method, (C) 0-400 pts.wt. fibrous magnesium hydroxide having ≥ 2.5 ratio of the length/diameter and ≥ 1 µm length and ≤ 20 m²/g specific surface area according to the BET method and (D) 0-100 pts.wt. high thermal conductivity improver.
(iv) JP2007211141,which describes heat conductive vibration damping and flame-retardant sheet having 0.2 mm thickness, obtained by including 74 pts.wt. of magnesium hydroxide treated with a higher fatty acid having 0.5-1 µm average particle diameter, 148 pts.wt. of silicon carbide and 148 pts.wt. of aluminum hydroxide, respectively in 100 pts.wt. of an acrylic polymer and forming the resultant mixture with a coater.

### DISCLOSURE OF THE INVENTION

It is an object of the present invention to provide a heat conductivity improving agent capable of improving the heat conductivity of a resin. It is another object of the present invention to provide a resin composition having excellent mechanical strength such as tensile strength and elongation and high heat conductivity as well as a molded article obtained therefrom. It is still another object of the present invention to improve the heat conductivity of a resin composition.

The inventors of the present invention conducted studies on the improvement of a heat conductivity improving agent which is a magnesium hydroxide particle. As a result, they found that a magnesium hydroxide particle having a high aspect ratio has an excellent effect as a heat conductivity improving agent. The present invention was accomplished based on this finding.

That is, the present invention is a heat conductivity improving agent which is a magnesium hydroxide particle having a thickness of 10 nm to 0.15 µm, an aspect ratio (long diameter/thickness) measured by a SEM method of not less than 15, and a BET specific surface area of 5 to 30 m²/g.

Further, the invention is the above resin composition comprising (i) 100 parts by weight of a resin and (ii) 20 to 300 parts by weight of a heat conductivity improving agent which is a magnesium hydroxide particle having a thickness of 10 nm to 0.15 µm, an aspect ratio (long diameter/thickness) measured by a SEM method of not less than 15, and a BET specific surface area of 5 to 30 m²/g.

The present invention is also a molded article of the above resin composition.

Further, the present invention is the use of the above magnesium hydroxide particle as a heat conductivity improving agent in a resin composition or as a heat dissipation agent in a resin composition, wherein the resin composition comprises (i) 100 parts by weight of a resin and (ii) 20 to 300 parts by weight of the magnesium hydroxide particle. Thus, the heat conductivity of a resin composition comprising a resin and a magnesium hydroxide particle may be improved by mixing 100 parts by weight of the resin with 20 to 300 parts by weight of the above magnesium hydroxide particle.

### BEST MODE FOR CARRYING OUT THE INVENTION

### <heat conductivity improving agent>

The heat conductivity improving agent of the present invention is a magnesium hydroxide particle having a thickness of 10 nm to 0.15 µm, an aspect ratio (long diameter/thickness) measured by a SEM method of not less than 15, and a BET specific surface area of 5 to 30 m²/g.

The thickness of the magnesium hydroxide particle when measured by the SEM method is 10 nm to 0.15 µm, preferably 10 nm to 0.08 µm. The lower limit of the thickness of the magnesium hydroxide particle may be 20 nm. The thickness of the magnesium hydroxide particle is the arithmetic average of the thickness measurement values of 10 arbitrary crystallites in a SEM photomicrograph (20,000 magnifications) (average thickness).

The aspect ratio (long diameter/thickness) of the magnesium hydroxide particle is not less than 15, preferably up to 100 and more preferably 50 to 200. The aspect ratio of the magnesium hydroxide particle is a value obtained by dividing the average long diameter obtained from the arithmetic average of the long diameter measurement values of 10 arbitrary crystallites by the average thickness in a SEM photomicrograph (20,000 magnifications).

The BET specific surface area of the magnesium hydroxide particle is 5 to 30 m²/g, preferably 10 to 30 m²/g, more preferably 10 to 25 m²/g and most preferably 10 to 20 m²/g.

Preferably, the magnesium hydroxide particle has a CaO content of not more than 0.01 wt%, a Cl content of not more than 0.05 wt%, an Na content of not more than 0.01 wt% and a total content of an iron compound, manganese compound, cobalt compound, chromium compound, copper compound, vanadium compound and nickel compound of not more than 0.02 wt% in terms of metals.

The magnesium hydroxide particle has a Mg (OH)₂ content of preferably not less than 99.0 wt%, more preferably not less than 99.5 wt% and much more preferably not less than 99.8 wt%.

### (process for producing magnesium hydroxide particle)

The magnesium hydroxide particle of the present invention having a high aspect ratio is obtained when a monovalent organic acid is existent in the production of a magnesium hydroxide particle by hydrothermally processing slurry coprecipitated by adding an alkali to a water-soluble magnesium salt.

Examples of the water-soluble magnesium salt include magnesium chloride, magnesium nitrate, magnesium acetate and magnesium sulfate. Examples of the alkali include caustic soda, calcium hydroxide, potassium hydroxide and ammonia water. Examples of the monovalent organic acid include acetic acid, propionic acid, butyric acid and formic acid. Sodium salts, potassium salts, magnesium salts and calcium salts thereof are also included.

The amount of the alkali is preferably 20 to 200 moles, more preferably 30 to 100 moles and much more preferably 40 to 90 moles based on 1 mole of the water-soluble magnesium salt. The amount of the monovalent organic acid is preferably 0.001 to 10 moles, more preferably 0.01 to 5.0 moles and much more preferably 0.05 to 3.0 moles based on 1 mole of the water-soluble magnesium salt.

The hydrothermal processing temperature is preferably 100 to 300°C, more preferably 110 to 250°C and much more preferably 130 to 200°C.

### (surface treating agent)

The magnesium hydroxide particle is preferably surface treated with a surface treating agent. The surface treating agent is at least one selected from the group consisting of higher fatty acids, anionic surfactants, phosphoric acid esters, coupling agents (silane-based, titanate-based and aluminum-based), esters of a polyhydric alcohol and a fatty acid, acrylic polymers and silicone treating agents.

The higher fatty acids include higher fatty acids having 10 or more carbon atoms such as stearic acid, erucic acid, palmitic acid, lauric acid and behenic acid. Alkali metal salts of these higher fatty acids may also be used.

The anionic surfactants include sulfuric acid ester salts of a higher alcohol such as stearyl alcohol or oleyl alcohol, sulfuric acid ester salts of polyethylene glycol ether, amide-linked sulfuric acid ester salts, ester-linked sulfuric acid ester salts, ester-linked sulfonates, amide-linked sulfonic acid salts, ether-linked sulfonic acid salts, ether-linked alkyl aryl sulfonic acid salts, ester-linked alkyl aryl sulfonic acid salts and amide-lin.ked alkyl aryl sulfonic acid salts.

The phosphoric acid esters include monoesters and diesters of orthophosphoric acid and oleyl alcohol or stearyl alcohol and mixtures thereof. Acid and alkali metal salts and amine salts of these esters may also be used.

The coupling agents include silane coupling agents such as vinyl ethoxysilane, vinyl-tris(2-methoxy-ethoxy)silane, gamma-methacryloxypropyltrimethoxysilane, gamma-aminopropyltrimethoxysilane, beta-(3,4-epoxycyclohexyl)ethyltrimethoxysilane, gamma-glycidoxypropyltrimethoxysilane and gamma-mercaptopropyltrimethoxysilane; titanate-based coupling agents such as isopropyl triisostearoyl titanate, isopropyl tris(dioctylpyrophosphate)titanate, isopropyl tri(N-aminoethyl-aminoethyl)titanate and isopropyl tridecylbenzene sulfonyl titanate; and aluminum-based coupling agents such as acetoalkoxyaluminum diisopropylate.

The esters of a polyhydric alcohol and a fatty acid include glycerin monostearate and glycerin monooleate.

To coat the surface of the magnesium hydroxide particle with the above surface treating agent, a wet or dry process known per se may be employed. For example, in the wet process, the surface treating agent in a liquid or emulsion form is added to magnesium hydroxide slurry and mechanically fully mixed with the slurry at a temperature up to about 100°C. In the dry process, the surface treating agent in a liquid, emulsion or solid form is added to a magnesium hydroxide powder while it is fully stirred by means of a mixer such as a Henschel mixer to be fully mixed with the powder under heating or non-heating. The amount of the surface treating agent to be added is preferably not more than 10 wt%, more preferably 1.0 to 8.0 wt%, much more preferably 1.0 to 3.0 wt% based on the weight of the magnesium hydroxide particle.

Rinsing, dehydration, granulation, drying, milling and classification are suitably selected as required and carried out on the surface treated magnesium hydroxide particle to produce a final product.

### (coating layer)

To enhance the acid resistance of the magnesium hydroxide particle, the surface of the magnesium hydroxide particle may be coated with a coating agent having acid resistance. The coating agent is an oxide or hydroxide of at least one element selected from the group consisting of silicon, aluminum, titanium, zirconia, zinc and boron. The magnesium hydroxide particle preferably has a coating layer made of silicon oxide or hydroxide formed by making silicic acid or a soluble salt thereof act thereon.

The amount of the coating agent is preferably not more than 2 wt%, more preferably 0.01 to 1.5 wt%, much more preferably 0.01 to 1.0 wt% based on the magnesium hydroxide particle.

Further, the surface of the coating layer may be treated with at least one surface treating agent selected from the group consisting of higher fatty acids, anionic surfactants, phosphoric acid esters, coupling agents and esters of a polyhydric alcohol and a fatty acid.

### <resin composition>

The resin composition of the present invention comprises (i) 100 parts by weight of a resin and (ii) 20 to 300 parts by weight of a heat conductivity improving agent, wherein the heat conductivity improving agent is a magnesium hydroxide particle having a thickness of 20 nm to 0.15 µm, an aspect ratio (long diameter/thickness) measured by a SEM method of not less than 15, and a BET specific surface area of 5 to 30 m²/g.

The resin composition of the present invention may be used as a sealing material for the heat generating parts of semiconductors, resistors and condensers and a material for parts for which heat radiation property is required, such as substrates, housings, heat exchangers and bearings.

Any resin is acceptable if it is generally used as a molded article. Examples of the resin include thermoplastic resins such as olefin (a-olefin) polymers and copolymers having 2 to 8 carbon atoms including polyethylene, polypropylene, ethylene-propylene copolymer, polybutene and poly·4-methylpentene-1, copolymers of these olefins and dienes, ethylene-acrylate copolymer, polystyrene, ABS resin, AAS resin, AS resin, MBS resin, ethylene-vinyl chloride copolymer resin, ethylene-vinyl acetate copolymer resin, ethylene-vinyl chloride-vinyl acetate graft polymer resin, vinylidene chloride, polyvinyl chloride, chlorinated polyethylene, chlorinated polypropylene, vinyl chloride-propylene copolymer, vinyl acetate resin, phenoxy resin, polyacetal, polyamide, polyimide, polycarbonate, polysulfone, polyphenylene oxide, polyphenylene sulfide, polyethylene terephthalate, polybutylene terephthalate and methacrylic resin.

Preferred examples of the thermoplastic resin include polyolefins and copolymers thereof. Specific examples thereof include polypropylene-based resins such as polypropylene homopolymer and ethylene-propylene copolymer, polyethylene-based resins such as high-density polyethylene, low-density polyethylene, linear low-density polyethylene ultralow-density polyethylene, EVA (ethylene vinyl acetate resin), EEA (ethylene ethyl acrylate resin), EMA (ethylene methyl acrylate copolymer resin), EAA (ethylene acrylic acid copolymer resin) and super high molecular weight polyethylene, and polymers and copolymers of an olefin (a-ethylene) having 2 to 6 carbon atoms such as polybutene and poly4-methylpentene-1.

Further, thermosetting resins such as epoxy resin, phenolic resin, melamine resin, unsaturated polyester resin, alkyd resin and urea resin, and synthetic rubbers such as EPDM, butyl rubber, isoprene rubber, SBR, NBR, chlorosulfonated polyethylene, NIR, urethane rubber, butadiene rubber, acrylic rubber, silicone rubber and fluorine rubber may also be used.

The content of the magnesium hydroxide particle in the resin composition is 20 to 300 parts by weight, preferably 25 to 200 parts by weight based on 100 parts by weight of the resin.

The resin composition of the present invention may comprise a heat conductivity improving aid. As the heat conductivity improving aid may be used a fibrous or chain inorganic substance which may be natural or synthetic. Examples of the aid include fibrous inorganic substances such as basic magnesium sulfate, carbon fibers, wollastonite, aluminum borate, potassium titanate, sepiolite and xonotlite, and chain inorganic substances such as acetylene black. The content of the heat conductivity improving aid in the resin composition is preferably not more than 200 parts by weight, more preferably 0.01 to 150 parts by weight, much more preferably 0.1 to 100 parts by weight based on 100 parts by weight of the resin.

Various additives, reinforcing material and filler may be added to the resin composition of the present invention. Examples of these include additives such as a vulcanizing agent, antioxidant, ultraviolet absorbent, flame retardant, optical stabilizer, metal inactivating agent, crosslinking agent, colorant, curing agent, lubricant, nucleating agent, foaming agent, deodorant, lithopone, clay, pieces of wood, glass fibers, ferrite, carbon black, talc, mica, calcium carbonate, red phosphorus, tin and inorganic salts thereof, metal fibers and metal powders, reinforcing materials and fillers.

### <molded article>

The present invention includes molded articles formed from the above resin composition. The molded articles include heat radiation sheets, heat radiation plates, heat radiation cases and heat radiation covers.

### <method of improving the heat conductivity of resin composition>

The present invention includes the use of the above magnesium hydroxide particle as a heat conductivity improving agent in a resin composition or as a heat dissipation agent in a resin composition. Thus, the heat conductivity of a resin composition comprising a resin and a magnesium hydroxide particle may be improved by mixing 20 to 300 parts by weight of the above magnesium hydroxide particle with 100 parts by weight of the resin. The resin and the magnesium hydroxide particle are as described above.

### EXAMPLES

The properties of the magnesium hydroxide particle and the resin composition were measured by the following methods .
(a) Heat conductivity: based on ISO/CD 22007-2. Apparatus: TPA-501 hot disk method thermophysical property measuring device (manufactured by Kyoto Electronics Manufacturing Co., Ltd.), using the RTK-7 sensor having a diameter of 7 mm
(b) BET specific surface area: This was measured in accordance with the method described in "Catalyst" (Vol. 2 No. 4, p. 473, 1960, Tokuji Takagi).
(c) Aspect ratio:
   SEM method: This was obtained from the arithmetic averages of long-diameter and thickness measurement values of 10 arbitrary crystallites in a SEM photomicrograph (20, 000 magnifications) of the magnesium hydroxide particle.
   Atomic force microscope method: This was measured by means of the OLS3500 of Olympus Corporation.
(d) CaO, Cl, Na: fluorescent X-ray method (base: atomic absorption method)
(e) Analysis of Fe, Mn, Cu, V, Co, Ni and Cr: ICP-MS method (Inductively Coupled Plasma-Mass Spectrometry)
(f) Mg(OH)₂: chelate titration method
(g) Tensile strength: JIS K6301 (vulcanized rubber physical method)
(h) Elongation: JIS K6301 (vulcanized rubber physical method)
(i) Hardness: JIS K6253 (spring type A)

### Example 1

213 liters of a sodium hydroxide aqueous solution having a concentration of 3.0 mol/L was added to 400 liters of a mixed aqueous solution of magnesium chloride and sodium acetate (Mg = 1.0 mol/L, sodium acetate = 1.5 mol/L, 30°C) under agitation to carry out a co-precipitation reaction. The whole amount of this reaction product was hydrothermally processed in a 1.0 kL autoclave at 160°C for 5 hours. After the reaction product was cooled to 100°C or lower, it was taken out from the autoclave, filtered, rinsed, dried and ground.

The obtained magnesium hydroxide was observed through a SEM, a photomicrograph thereof was taken, and the long diameters and thicknesses of 10 crystallites were measured to be averaged. As a result, the long diameter was 2.6 µm, the thickness was 0.12 µm and therefore the aspect ratio was 21. The aspect ratio measured through an atomic force microscope was 46.

### Example 2

1.8 liters of an ammonia water solution (30°C) having a concentration of 8 mol/L was added to 4 liters of a mixed aqueous solution of magnesium chloride and sodium acetate both of which are extra pure reagents (Mg =2.0 mol/L, sodium acetate = 2.0 mol/L, 30°C) under agitation to carry out a co-precipitation reaction. 1 liter of this reaction product was collected and put into an autoclave to be hydrothermally processed at 250°C for 3 hours. After the reaction product was cooled to 100°C or lower, it was taken out from the autoclave, filtered, rinsed, dried and ground.

The obtained magnesium hydroxide was observed through a SEM, a photomicrograph thereof was taken, and the widths and thicknesses of 10 crystallites were measured to be averaged. As a result, the width was 4.5 µm, the thickness was 0.06 µm and therefore the aspect ratio was 75. The aspect ratio measured through an atomic force microscope was 130.

### Example 3

1.6 liters of caustic soda having a concentration of 8.0 mol/L (35°C) was added to 5 liters of a mixed aqueous solution of magnesium nitrate and sodium propionate both of which are extra pure reagents (Mg = 1.5 mol/L, sodium propionate = 1.0 mol/L, 30°C) under agitation to carry out a co-precipitation reaction. 1 liter of this reaction product was collected, hydrothermally processed in an autoclave at 180°C for 4 hours and then treated in the same manner as in Example 1.

When the obtained magnesium hydroxide was observed through a SEM, the width of a crystal was 3.8 µm, the thickness thereof was 0.09 µm and therefore the aspect ratio was 42. The aspect ratio measured through an atomic force microscope was 73.

### Example 4

240 liters of ammonia water having a concentration of 4.0 mol/L (35°C) was added to 400 liters of a mixed aqueous solution of magnesium nitrate and ammonium acetate (Mg = 1.5 mol/L, ammonium acetate = 1.5 mol/L, 35°C) under agitation to carry out a co-precipitation reaction. The whole amount of this reaction product was hydrothermally processed in a 1.0 kL autoclave at 200°C for 4 hours and then treated in the same manner as in Example 1. When the obtained magnesium hydroxide was observed through a SEM and a photomicrograph thereof was taken to be measured, the crystallites had a long diameter of 3.5 µm, a thickness of 0.11 µm and therefore an aspect ratio of 31. The aspect ratio measured through an atomic force microscope was 78.

### Example 5 (surface treatment)

500 g of the magnesium hydroxide particle obtained in Example 1 was put into a Henschel mixer, and 5 g of vinylsilane corresponding to 1 wt% based on the weight of the magnesium hydroxide particle was diluted with 50 mL of ethanol under high-speed agitation and added to the magnesium hydroxide particle so as to treat the surface of the particle. This was dried at 120°C.

### Comparative Example 1

The procedure of Example 1 was repeated except that sodium acetate was not used. The crystallite of the obtained magnesium hydroxide particle had a long diameter of 0.77 µm, a thickness of 0.14 µm and an aspect ratio of 5.5. The aspect ratio measured by an atomic force microscope was 10.

The characteristic properties of magnesium hydroxide particles obtained in Examples 1 to 4 and Comparative Example 1 are shown in Table 1.

**Table 1**

| | Example 1 | Example 2 | Example 3 | Example 4 | Comparative Example 1 |
|---|---|---|---|---|---|
| Aspect ratio ¹) | 21 | 75 | 42 | 31 | 5.5 |
| Aspect ratio ²) | 46 | 130 | 73 | 78 | 10 |
| BET specific surface area (m²/g) | 9.5 | 17.0 | 12.1 | 13.5 | 6.5 |
| CaO(wt%) | 0.001> | 0.001> | 0.001> | 0.001> | 0.011 |
| Cl(wt%) | 0.005 | 0.011 | 0.010 | 0.010 | 0.037 |
| Na(wt%) | 0.001 | 0.001 | 0.002 | 0.001 | 0.013 |
| Fe(wt%) | 0.001 | 0.003 | 0.002 | 0.003 | 0.005 |
| Mn(wt%) | 0.001 | 0.001 | 0.001 | 0.001 | 0,001 |
| Cu(wt%) | 0.0001≧ | 0.0001≧ | 0.0001≧ | 0.0001≧ | 0.0001≧ |
| V(wt%) | 0.0001≧ | 0.0001≧ | 0.0001≧ | 0.0001≧ | 0.0001≧ |
| Co(wt%) | 0.0001≧ | 0.0001≧ | 0.0001≧ | 0.0001≧ | 0.0001≧ |
| Ni (wt%) | 0.0001≧ | 0.0001≧ | 0.0001≧ | 0.0001≧ | 0.0001≧ |
| Cr(wt%) | 0.0001≧ | 0.0001≧ | 0.0001≧ | 0.0001≧ | 0.0001≧ |
| Mg(OH)₂ (wt%) | 99.91 | 99.90 | 99.87 | 99.90 | 99.58 |

| | | | | | |
|---|---|---|---|---|---|
| 1) Aspect ratio measured by SEM method 2) Aspect ratio measured by atomic force microscope method | | | | | |

### Example 6

100 parts by weight of dimethyl vinyl silicone rubber (TSE201 of Momentive Performance Materials Japan Inc.) and 100 parts by weight of the magnesium hydroxide particle obtained in Example 1 as a heat conductivity filler were fed to a kneader to be kneaded together. A dimethyl vinyl silicone rubber compound which had been fully kneaded was collected and uniformly mixed with 1.0 part by weight of 2,5-dimethyl-2,5-t-butyl peroxyhexane (TC-8 of Momentive Performance Materials Japan Inc.) as a crosslinking agent to prepare a composition.

The obtained composition was formed into a 2 mm-thick sheet which was then press vulcanized at 160°C for 10 minutes and secondarily vulcanized at 200°C for 4 hours. 24 hours after the vulcanized sheet was returned to normal temperature, the hardness, tensile strength and elongation of the sheet were measured in accordance with JIS-K6301 (vulcanized rubber physical method) . Further, the heat conductivity of the sheet was measured by using the TPA-501 hot disk method thermophysical property measuring device (of Kyoto Electronics Manufacturing Co., Ltd.) in accordance with ISO/CC22007-2. The evaluation results are shown in Table 2.

### Example 7

A sheet was manufactured in the same manner as in Example 6 except that the magnesium hydroxide particle obtained in Example 2 was used in place of the magnesium hydroxide particle obtained in Example 1 to measure its heat conductivity. The evaluation results are shown in Table 2.

### Example 8

A sheet was manufactured in the same manner as in Example 6 except that the magnesium hydroxide particle obtained in Example 3 was used in place of the magnesium hydroxide particle obtained in Example 1 to measure its heat conductivity. The evaluation results are shown in Table 2.

### Example 9

A sheet was manufactured in the same manner as in Example 6 except that the magnesium hydroxide particle obtained in Example 4 was used in place of the magnesium hydroxide particle obtained in Example 1 to measure its heat conductivity. The evaluation results are shown in Table 2.

### Comparative Example 2

A sheet was manufactured in the same manner as in Example 6 except that the magnesium hydroxide particle obtained in Comparative Example 1 was used in place of the magnesium hydroxide particle obtained in Example 1 to measure its heat conductivity. The evaluation results are shown in Table 2.

**Table 2**

| Specimen | Magnesium hydroxide particle in use | Temperature | Output | Time | Heat conductivity (W/m·K) | | | | Hardness (JIS A) | Tensile strength (MPa) | Elongation (%) |
|---|---|---|---|---|---|---|---|---|---|---|---|
| | | (°C) | (W) | (sec) | r=1 | r=2 | r=3 | Average | | | |
| Ex. 6 | Ex. 1 | 23 | 0.12 | 10 | 0.953 | 0.945 | 0.941 | 0.946 | 41 | 1.57 | 350 |
| Ex. 7 | Ex. 2 | 23 | 0.12 | 10 | 0.959 | 0.952 | 0.948 | 0.953 | 46 | 2.26 | 210 |
| Ex. 8 | Ex. 3 | 23 | 0.12 | 10 | 0.948 | 0.941 | 0.939 | 0.942 | 45 | 2.15 | 220 |
| Ex. 9 | Ex. 4 | 23 | 0.12 | 10 | 1.010 | 0.987 | 0.981 | 0.992 | 46 | 2.30 | 190 |
| C. Ex. 2 | C. Ex. 1 | 23 | 0.07 | 20 | 0.548 | 0.548 | 0.542 | 0.545 | 39 | 1.35 | 425 |

| | | | | | | | | | | | |
|---|---|---|---|---|---|---|---|---|---|---|---|
| Ex.: Example, C.Ex.: Comparative Example | | | | | | | | | | | |

### Example 10-1 (production of heat radiation sheet)

100 parts by weight of dimethyl vinyl silicone rubber (TSE201 of Momentive Performance Materials Japan Inc.) and 25 parts by weight of the magnesium hydroxide particle obtained in Example 4 were kneaded together by means of a double-screw open roll. In this case, the magnesium hydroxide particle having a high aspect ratio was gradually injected while the crude dimethyl vinyl silicone rubber was wound round a roll to a roll width scale mark of 10. At a roll width scale mark of 13, the kneaded product was scraped off from the roll and re-kneaded 10 times, 2.5-dimethyl-2,5-t-butyl peroxyhexane (TC-8 of Momentive Performance Materials Japan Inc.) as a vulcanizing agent was added, and the kneaded product was scraped off from the roll and re-kneaded 10 times again. After the kneaded product was scraped off from the roll and re-kneaded 10 times at a roll width scale mark of 15, the resulting silicone rubber compound was collected.

This silicone rubber compound was formed into a 2 mm-thick sheet which was then press vulcanized at 160°C for 10 minutes and then secondarily vulcanized at 200°C for 4 hours to produce a heat radiation sheet. 24 hours after the sheet was returned to normal temperature, the tensile strength, elongation, hardness and heat conductivity of the sheet were measured. The evaluation results are shown in Table 3.

### Examples 10-2 to 10-4 (production of heat radiation sheet)

Heat radiation sheets were produced in the same manner as in Example 10-1 except that the amount of the magnesium hydroxide particle obtained in Example 4 was changed as shown in Table 3. The evaluation results are shown in Table 3.

### Example 10-5

300 g of magnesium hydroxide obtained in Example 2 was ground and dispersed in isopropyl alcohol by using a stirrer, and 9 g of methyl hydrogen silicone (KF-9901 of Shin-Etsu Chemical Co., Ltd.) was added to the resulting dispersion to surface treat the magnesium hydroxide. Thereafter, the surface treated magnesium hydroxide was filtered, dried and ground. 100 parts by weight of the obtained powder and a crosslinking agent (peroxide) were added to and mixed with 100 parts by weight of dimethyl vinyl silicone rubber by means of an open roll and crosslinked at 160°C for 10 minutes by using a press molding machine to pressure form a specimen having a diameter of 50 mm and a thickness of 3.0 mm. This specimen was used to measure its heat conductivity in accordance with a steady heat flow method (based on ASTM E1530). The results are shown in Table 3.

### Example 10-6

After magnesium hydroxide obtained in Example 3 was ground and surface treated with silicone in the same manner as in Example 5, 100 parts by weight thereof was added to and kneaded with 100 parts by weight of dimethyl vinyl silicone rubber, and the kneaded product was molded to produce a test specimen. The measurement result of the heat conductivity of this test specimen is shown in Table 3.

### Comparative Example 3

A heat radiation sheet was produced in the same manner as in Example 10-1 to measure its heat conductivity except that 100 parts by weight of KISUMA 8 (magnesium hydroxide manufactured by Kyowa Chemical Industry Co., Ltd. and having an aspect ratio measured by a SEM method of 4.8) was used in place of 25 parts by weight of the magnesium hydroxide particle obtained in Example 4. The evaluation results are shown in Table 3.

**Table 3**

| | Ex. 10-1 | Ex. 10-2 | Ex. 10-3 | Ex. 10-4 | Ex. 10-5 | Ex. 10-6 | C. Ex.3 |
|---|---|---|---|---|---|---|---|
| Amount of dimethyl vinyl silicone rubber | 100 | 100 | 100 | 100 | 100 | 100 | 100 |
| Amount of magnesium hydroxide obtained in Example 4 | 25 | 45 | 70 | 100 | - | - | - |
| Amount of magnesium hydroxide obtained in Example 2 | - | - | - | - | 100 | - | - |
| Amount of magnesium hydroxide obtained in Example 3 | - | - | - | - | - | 100 | - |
| Amount of KISMA 8 | - | - | - | - | - | - | 100 |
| Tensile strength (Mpa) | 1.12 | 1.46 | 1.81 | 2.13 | 1.07 | 0.89 | 0.81 |
| Elongation (%) | 347 | 340 | 418 | 351 | 210 | 215 | 428 |
| Hardness (JIS A) | 22 | 27 | 38 | 46 | 46 | 49 | 29 |
| Heat conductivity (W/m·K) | 0.35 | 0.50 | 0.65 | 0.80 | 0.85 | 0.91 | 0.54 |

| | | | | | | | |
|---|---|---|---|---|---|---|---|
| Ex.: Example C.Ex.: Comparative Example KISUMA 8 : magnesium hydroxide manufactured by Kyowa Chemical Industry Co., Ltd, (aspect ratio measured by SEM method: 4.8) | | | | | | | |

### Effect of the Invention

Since the heat conductivity improving agent of the present invention is a magnesium hydroxide particle having a high aspect ratio, it can provide high heat conductivity to a resin. The resin composition of the present invention has high heat conductivity.
According to the present invention, the heat conductivity of a resin composition can be improved without deteriorating the physical properties of the resin composition.

## Claims

1. A heat conductivity improving agent which is a magnesium hydroxide particle having:
(a) a thickness of 10 nm to 0.15 µm,
(b) an aspect ratio (long diameter/thickness) measured by a SEM method of not less than 15 and
(c) a BET specific surface area of 5 to 30 m²/g.

2. The heat conductivity improving agent according to claim 1, wherein the BET specific surface area of the magnesium hydroxide particle is 10 to 30 m²/g.

3. The heat conductivity improving agent according to claim 1, wherein the magnesium hydroxide particle has a CaO content of not more than 0.01 wt%, a C1 content of not more than 0.05 wt%, a Na content of not more than 0.01 wt%, a total content of an iron compound, manganese compound, cobalt compound, chromium compound, copper compound, vanadium compound and nickel compound of not more than 0.02 wt% in terms of metals, and a Mg(OH)₂ content of not less than 99.5 wt%.

4. The heat conductivity improving agent according to claim 1 which is surface treated with at least one surface treating agent selected from the group consisting of higher fatty acids, anionic surfactants, phosphoric acid esters, coupling agents, esters of a polyhydric alcohol and a fatty acid and silicone oil.

5. The heat conductivity improving agent according to claim 1 which has a coating layer made of an oxide or hydroxide of at least one element selected from the group consisting of silicon, aluminum, titanium, zirconia, zinc and boron.

6. The heat conductivity improving agent according to claim 1 which has a coating layer made of silicon oxide or hydroxide formed by making silicic acid or a soluble salt thereof act thereon.

7. The heat conductivity improving agent according to claim 5 or 6, wherein the surface of the coating layer is further treated with at least one surface treating agent selected from the group consisting of higher fatty acids, anionic surfactants, phosphoric acid esters, coupling agents and esters of a polyhydric alcohol and a fatty acid.

8. A resin composition comprising (i) 100 parts by weight of a resin and (ii) 20 to 300 parts by weight of a heat conductivity improving agent which is a magnesium hydroxide particle having:
(a) a thickness of 10 nm to 0.15 µm,
(b) an aspect ratio (long diameter/thickness) measured by a SEM method of not less than 15 and
(c) a BET specific surface area of 5 to 30 m²/g.

9. The resin composition according to claim 8, wherein the resin is silicone rubber.

10. A molded article formed from the resin composition of claim 8.

11. Use of magnesium hydroxide particle as a heat conductivity improving agent in a resin composition, wherein the magnesium hydroxide particle has:
(a) a thickness of 10 nm to 0.15 µm,
(b) an aspect ratio (long diameter/thickness) measured by a SEM method of not less than 15 and
(c) a BET specific surface area of 5 to 30 m²/g;
and wherein the resin composition comprises (i) 100 parts by weight of a resin and (ii) 20 to 300 parts by weight of the magnesium hydroxide particle.

12. Use according to claim 11, wherein the magnesium hydroxide particle is as defined in claim 2 or 3.

13. Use according to claim 11, wherein the magnesium hydroxide particle is surface treated as defined in claim 4.

14. Use according to claim 11, wherein the magnesium hydroxide particle has a coating layer as defined in claim 5, 6 or 7.

## Patentansprüche

1. Wärmeleitfähigkeit-Verbesserungsmittel, das ein Magnesiumhydroxidteilchen mit Folgendem ist:
(a) einer Dicke von 10 nm bis 0,15 µm,
(b) einem Seitenverhältnis (langer Durchmesser/Dicke), gemessen durch ein SEM-Verfahren, von nicht weniger als 15, und
(c) einer spezifischen BET-Oberfläche von 5 bis 30 m²/g.

2. Wärmeleitfähigkeit-Verbesserungsmittel nach Anspruch 1, wobei die spezifische BET-Oberfläche des Magnesiumhydroxidteilchens 10 bis 30 m²/g beträgt.

3. Wärmeleitfähigkeit-Verbesserungsmittel nach Anspruch 1, wobei das Magnesiumhydroxidteilchen einen CaO-Gehalt von nicht mehr als 0,01 Gew.-%, einen Cl-Gehalt von nicht mehr als 0,05 Gew.-%, einen Na-Gehalt von nicht mehr als 0,01 Gew.-%, einen Gesamtgehalt einer Eisenverbindung, Manganverbindung, Kobaltverbindung, Chromverbindung, Kupferverbindung, Vanadiumverbindung und Nickelverbindung von nicht mehr als 0,02 Gew.-% in Bezug auf Metalle und einen Mg(OH)₂-Gehalt von nicht weniger als 99,5 Gew.-% aufweist.

4. Wärmeleitfähigkeit-Verbesserungsmittel nach Anspruch 1, das mit mindestens einem Oberflächenbehandlungsmittel oberflächenbehandelt ist, ausgewählt aus der Gruppe bestehend aus höheren Fettsäuren, anionischen Tensiden, Phosphorsäureestern, Kupplungsmitteln, Estern eines mehrwertigen Alkohols und einer Fettsäure und Silikonöl.

5. Wärmeleitfähigkeit-Verbesserungsmittel nach Anspruch 1, das eine Beschichtung hat, die aus einem Oxid oder Hydroxid von mindestens einem Element hergestellt ist, ausgewählt aus der Gruppe bestehend aus Silizium, Aluminium, Titan, Zirkonoxid, Zink und Bor.

6. Wärmeleitfähigkeit-Verbesserungsmittel nach Anspruch 1, das eine Beschichtung hat, die aus Siliziumoxid oder Hydroxid hergestellt ist, dadurch gebildet, dass Kieselsäure oder ein lösliches Salz davon darauf wirken gelassen wird.

7. Wärmeleitfähigkeit-Verbesserungsmittel nach Anspruch 5 oder 6, wobei die Oberfläche der Beschichtung ferner mit mindestens einem Oberflächenbehandlungsmittel behandelt wird, ausgewählt aus der Gruppe bestehend aus höheren Fettsäuren, anionischen Tensiden, Phosphorsäureestern, Kupplungsmitteln und Estern eines mehrwertigen Alkohols und einer Fettsäure.

8. Harzzusammensetzung, umfassend (i) 100 Gewichtsteile eines Harzes und (ii) 20 bis 300 Gewichtstiele eines Wärmeleitfähigkeit-Verbesserungsmittels, das ein Magnesiumhydroxidteilchen mit Folgendem ist:
(a) einer Dicke von 10 nm bis 0,15 µm,
(b) einem Seitenverhältnis (langer Durchmesser/Dicke), gemessen durch ein SEM-Verfahren, von nicht weniger als 15, und
(c) einer spezifischen BET-Oberfläche von 5 bis 30 m²/g.

9. Harzzusammensetzung nach Anspruch 8, wobei das Harz Silikonkautschuk ist.

10. Formartikel, gebildet aus der Harzzusammensetzung nach Anspruch 8.

11. Verwendung eines Magnesiumhydroxidteilchens als ein Wärmeleitfähigkeit-Verbesserungsmittel in einer Harzzusammensetzung, wobei das Magnesiumhydroxidteilchen Folgendes hat:
(a) einer Dicke von 10 nm bis 0,15 µm,
(b) einem Seitenverhältnis (langer Durchmesser/Dicke), gemessen durch ein SEM-Verfahren, von nicht weniger als 15, und
(c) einer spezifischen BET-Oberfläche von 5 bis 30 m²/g;
und wobei die Harzzusammensetzung (i) 100 Gewichtsteile eines Harzes und (ii) 20 bis 300 Gewichtstiele des Magnesiumhydroxidteilchens umfasst.

12. Verwendung nach Anspruch 11, wobei das Magnesiumhydroxidteilchen wie in Anspruch 2 oder 3 definiert ist.

13. Verwendung nach Anspruch 11, wobei das Magnesiumhydroxidteilchen wie in Anspruch 4 definiert oberflächenbehandelt ist.

14. Verwendung nach Anspruch 11, wobei das Magnesiumhydroxidteilchen wie in Anspruch 5, 6 oder 7 definiert eine Beschichtung hat.

## Revendications

1. Agent d'amélioration de conductivité thermique qui est une particule d'hydroxyde de magnésium ayant :
(a) une épaisseur de 10 nm à 0,15 µm,
(b) un rapport d'aspect (diamètre long/épaisseur), mesuré par une méthode SEM, non inférieur à 15, et
(c) une surface spécifique BET de 5 à 30 m²/g.

2. Agent d'amélioration de conductivité thermique selon la revendication 1, dans lequel la surface spécifique BET de la particule d'hydroxyde de magnésium est de 10 à 30 m²/g.

3. Agent d'amélioration de conductivité thermique selon la revendication 1, dans lequel la particule d'hydroxyde de magnésium a une teneur en CaO non supérieure à 0,01 % en poids, une teneur en C1 non supérieure à 0,05 % en poids, une teneur en Na non supérieure à 0,01 % en poids, une teneur totale en un composé de fer, composé de manganèse, composé de cobalt, composé de chrome, composé de cuivre, composé de vanadium, et composé de nickel non supérieure à 0,02 % en poids en termes de métaux, et une teneur en Mg(OH)₂ non inférieure à 99,5 % en poids.

4. Agent d'amélioration de conductivité thermique selon la revendication 1, qui est traité en surface avec au moins un agent de traitement en surface sélectionné parmi le groupe constitué de : acides gras supérieurs, surfactants anioniques, esters d'acide phosphorique, agents de couplage, esters d'un alcool polyhydrique et d'un acide gras et huile de silicone.

5. Agent d'amélioration de conductivité thermique selon la revendication 1, qui a une couche d'enrobage faite d'un oxide ou hydroxyde d'au moins un élément sélectionné parmi le groupe constitué de : silicium, aluminium, titane, zircone, zinc et bore.

6. Agent d'amélioration de conductivité thermique selon la revendication 1, qui a une couche d'enrobage faite d'oxyde ou d'hydroxyde de silicium formée en faisant en sorte qu'un acide silicique ou un sel soluble de celui-ci agisse sur celle-ci.

7. Agent d'amélioration de conductivité thermique selon la revendication 5 ou 6, dans lequel la surface de la couche d'enrobage est en outre traitée avec au moins un agent de traitement en surface sélectionnée parmi le groupe constitué de : acides gras supérieurs, surfactants anioniques, esters d'acide phosphorique, agents de couplage et esters d'un alcool polyhydrique et d'un acide gras.

8. Composition de résine, comprenant (i) 100 parties en poids d'une résine et (ii) de 20 à 300 parties en poids d'un agent d'amélioration de conductivité thermique qui est une particule d'hydroxyde de magnésium ayant :
(a) une épaisseur de 10 nm à 0,15 µm,
(b) un rapport d'aspect (diamètre long/épaisseur), mesuré par une méthode SEM, non inférieur à 15, et
(c) une surface spécifique BET de 5 à 30 m²/g.

9. Composition de résine selon la revendication 8, dans laquelle la résine est du caoutchouc de silicone.

10. Article moulé formé à partir de la composition de résine de la revendication 8.

11. Utilisation de particule d'hydroxyde de magnésium en tant qu'agent d'amélioration de conductivité thermique dans une composition de résine, dans laquelle la particule d'hydroxyde de magnésium a :
(a) une épaisseur de 10 nm à 0,15 µm,
(b) un rapport d'aspect (diamètre long/épaisseur), mesuré par une méthode SEM, non inférieur à 15, et
(c) une surface spécifique BET de 5 à 30 m²/g ;
et dans laquelle la composition de résine comprend (i) 100 parties en poids d'une résine et (ii) de 20 à 300 parties en poids de la particule d'hydroxyde de magnésium.

12. Utilisation selon la revendication 11, dans laquelle la particule d'hydroxyde de magnésium est telle que définie dans la revendication 2 ou 3.

13. Utilisation selon la revendication 11, dans laquelle la particule d'hydroxyde de magnésium est traitée en surface comme cela est défini dans la revendication 4.

14. Utilisation selon la revendication 11, dans laquelle la particule d'hydroxyde de magnésium a une couche d'enrobage telle que définie dans la revendication 5, 6 ou 7.
